# EUROPEAN PATENT APPLICATION

(11) **EP 4 651 295 A1**
(43) Date of publication of application: **19.11.2025**
(21) Application number: 24820915.7
(22) Date of filing: 28.08.2024
(51) Int. Cl.: H01M 50/528, H01M 50/531

(54) **CURRENT COLLECTOR AND BATTERY CELL**

(30) Priority: 03.04.2024 CN 202420691515 U; 03.04.2024 CN 202410406872
(71) Applicant: HUIZHOU EVE POWER CO., LTD, Huizhou, Guangdong 516039 (CN); Eve Power Co., Ltd., Jingmen, Hubei 448000 (CN)
(72) Inventor: SHU, Kuanjin, Huizhou, Guangdong 516039 (CN); LIU, Ziwen, Huizhou, Guangdong 516039 (CN); DUAN, Dong, Huizhou, Guangdong 516039 (CN); HE, Wei, Huizhou, Guangdong 516039 (CN)
(74) Representative: Berggren Oy
(86) International application number: PCT/CN2024/115070
(87) International publication number: WO 2025/208785

(57) **Abstract**

The disclosure provides a current collector and a battery cell, which relate to a field of battery technology. The current collector includes a first conductive part, the first conductive part extends along a first direction, has a first surface away from a core package, and is provided with a groove at the first surface, the groove extends along the first direction; wherein the groove divides the first conductive part into a vertical part and a welding part.

## Description

This application claims the priority of Chinese patent applications with application numbers 202420691515.X and 202410406872.1 filed with the China National Intellectual Property Administration on April 3, 2024. The entire contents of the above applications are incorporated by reference into this application.

### TECHNICAL FIELD

The present disclosure relates to a field of battery technology, and in particular to a current collector and a battery cell.

### BACKGROUND

In power batteries, there are many ways to place a tab of a square battery. One of the ways is that a positive tab and a negative tab are respectively placed at two ends of the core package in a length direction of the core package, and a current collector is used as an intermediate element between the tab and the pole. The core package is formed by stacking a positive electrode sheet, a negative electrode sheet and a diaphragm in sequence. The core package has two end surfaces and a wide surface and a narrow surface connected to the two end surfaces. The current collector includes a horizontal part, a vertical part and a welding part. The horizontal part is parallel to the end surface of the core package and is connected to the pole. The vertical part is parallel to the narrow surface of the core package, an end of the vertical part is connected to the horizontal part, and another end of the vertical part is connected to the welding part. In order to facilitate the welding of the tab to the current collector, the welding part is parallel to the tab during welding. After the welding is completed, in order to facilitate the insertion of the core package into the shell, the welding part needs to be bent at a connection portion between the welding part and the vertical part so that the welding part is close to the vertical part, thereby reducing a distance between the welding part and the core package.

### TECHNICAL PROBLEM

After this current collector is bent, there is a greater gap at the connection portion between the welding part and the vertical part. Therefore, the size of the current collector is greater in the length direction of the core package, the current collector occupies more space of the battery cell, and there is an adverse effect on the energy density of the battery cell.

In addition, after the current collector has been bent, the gap will cause the distance between a side of the connection portion, which is between the welding part and the vertical part, and the vertical part to be greater, while the distance between the other side of the welding part and the vertical part to be less, resulting in poor parallelism of the welding part relative to the vertical part, which will cause the ridge edge of the welding part at a side of the welding part away from the bent portion to protrude toward the insulation member of the battery cell and pierce the insulation member. As a result, there is a risk of short circuit inside the battery.

### TECHNICAL SOLUTION

In a first aspect, the present disclosure provides a current collector, the current collector includes a first conductive part, the first conductive part extends along a first direction, the first conductive part has a first surface away from a core package, the first surface is provided with a groove, and the groove extends along the first direction; where the groove divides the first conductive part into a vertical part and a welding part.

In a second aspect, the present disclosure provides a battery cell, the battery cell includes a shell, a core package, a pole and a current collector; the shell has a receiving cavity; the core package is arranged in the receiving cavity; the pole is inserted into an end of the shell; and the current collector connects a pole with a tab of the core package.

In a third aspect, the present disclosure provides a core package, the core package includes a battery box and the aforementioned battery cells, there are a plurality of battery cells, and the plurality of battery cells are arranged in the battery box.

### BENEFICIAL EFFECT

The present disclosure may reduce the number of the material of the connection portion between the vertical part and the welding part by setting a groove between the vertical part and the welding part, thereby reducing the internal stress of the connection portion during the bending process of the welding part approaching the vertical part, and further reducing the obstruction of the connection portion for the welding part approaching the vertical part, so as to reduce the gap between the welding part and the vertical part.

### BRIEF DESCRIPTION OF THE DRAWINGS

FIG. 1 is a schematic block diagram of a current collector according to some embodiments of the present disclosure;
FIG. 2 is an enlarged view of a portion A in FIG. 1;
FIG. 3 is a schematic diagram of a welding part matching with a tab after a first bending of the welding part according to some embodiments of the present disclosure;
FIG. 4 is a schematic diagram of a welding part matching with a tab after a second bending of the welding part according to some embodiments of the present disclosure;
FIG. 5 is a schematic block diagram of a groove after a welding part has been bent for the second time according to some embodiments of the present disclosure;
FIG. 6 is a schematic block diagram of a groove after a welding part has been bent for the second time according to some embodiments of the present disclosure;
FIG. 7 is a schematic block diagram of a groove according to another some embodiments of the present disclosure;
FIG. 8 is a schematic block diagram of a current collector according to another some embodiments of the present disclosure;
FIG. 9 is an enlarged view of a portion B in FIG. 8;
FIG. 10 is a schematic block diagram of a groove after a welding part has been bent for the second time according to some embodiments of the present disclosure;
FIG. 11 is a schematic block diagram of a groove according to another some embodiments of the present disclosure;
FIG. 12 is a partial block schematic diagram of a longitudinal section of a pole matching hole according to some embodiments of the present disclosure;
FIG. 13 is a schematic diagram of matching between a horizontal part and a pole according to some embodiments of the present disclosure;
FIG. 14 is a schematic block diagram of a battery cell according to some embodiments of the present disclosure;
FIG. 15 is an enlarged view of a portion C in FIG. 14.

### Description of reference numerals:

001-current collector;
011-horizontal part; 111-pole matching hole; 112-third surface; 113-first sink platform; 114-fourth surface; 115-second sink platform;
012-vertical part;
013-first conductive part; 131-groove; 1311-first groove wall; 132-first surface; 133-second surface; 134-middle groove;
014-welding part;
002-battery cell; 021-shell; 211-receiving cavity; 022-cover; 023-core package; 024-pole; 025-tab.

### DETAILED DESCRIPTION OF EMBODIMENTS

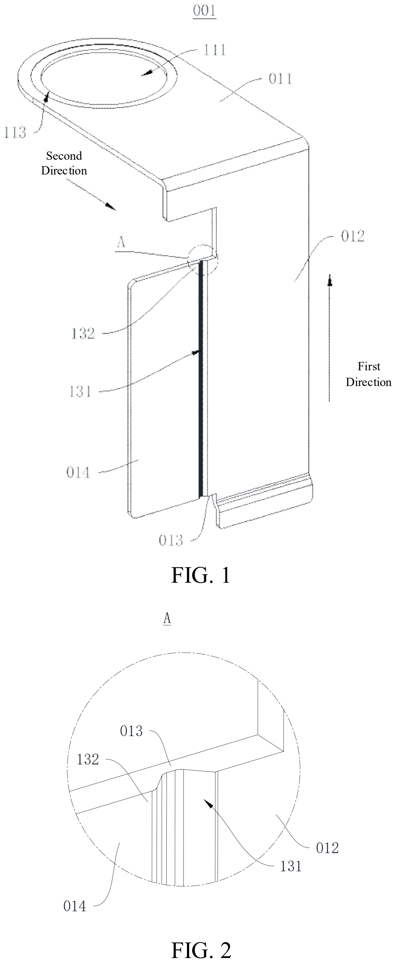

Please refer to FIG. 1 and 2, FIG. 1 is a schematic block diagram of a current collector 001 according to some embodiments of the present disclosure, and FIG. 2 is an enlarged view of a portion A in FIG. 1. Some embodiments of the present disclosure provide the current collector 001. The current collector 001 includes a first conductive part 013. The first conductive part 013 extends along a first direction. The first conductive part 013 has a first surface 132 away from a core package. The first conductive part 013 is provided with a groove 131 at the first surface 132. The groove 131 extends along the first direction. The groove 131 divides the first conductive part 013 into a vertical part 012 and a welding part 014.

The first direction is an axial direction of the battery cell.

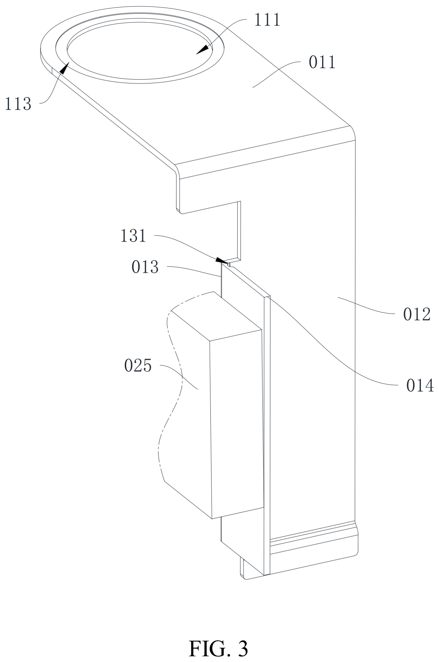

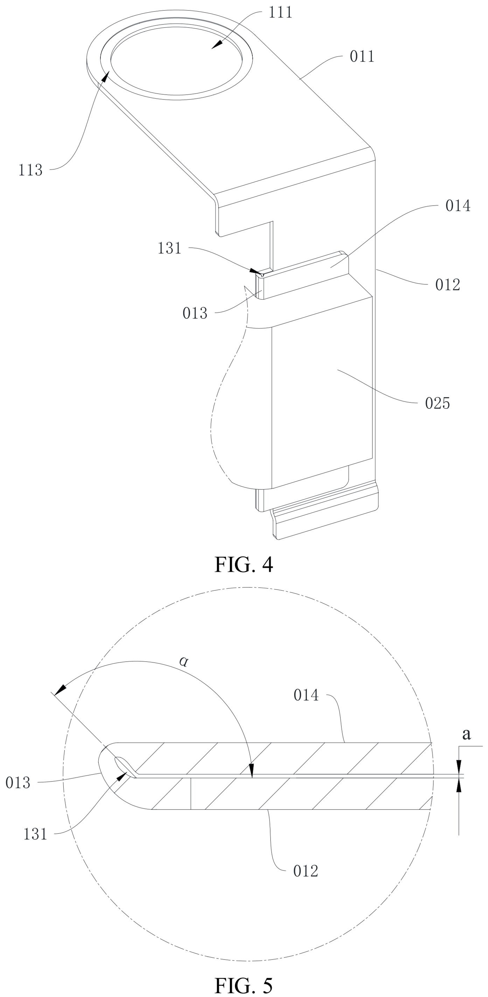

It can be understood that the current collector 001 is mainly formed by stamping of a plate. After being stamped, the vertical part 012 and the welding part 014 are located in the same horizontal plane. In order to adapt to the connection portion between a tab and the current collector 001, the welding part 014 is bent for the first time at the connection portion between the welding part 014 and the vertical part 012, so that the welding part 014 is perpendicular to the vertical part 012. In a state where the welding part 014 is perpendicular to the vertical part 012, the tab is welded to the welding part 014, as shown in FIG. 3. FIG. 3 is a schematic diagram of the welding part 014 matching with the tab after the first bending of the welding part according to some embodiments of the present disclosure. After the tab is welded to the welding part 014, the welding part 014 is bent for the second time at the connection portion between the welding part 014 and the vertical part 012, to bring the welding part 014 closer to the vertical part 012, as shown in FIG. 4. FIG. 4 is a schematic diagram of the welding part 014 matching with the tab after the second bending of the welding part according to some embodiments of the present disclosure. Under the condition that the first conductive part 013 is provided with the groove 131, the welding part 014 is bent toward the vertical part 012 with the groove 131 as an axis, so that the welding part 014 is parallel to the vertical part 012 and moves closer to the vertical part 012.

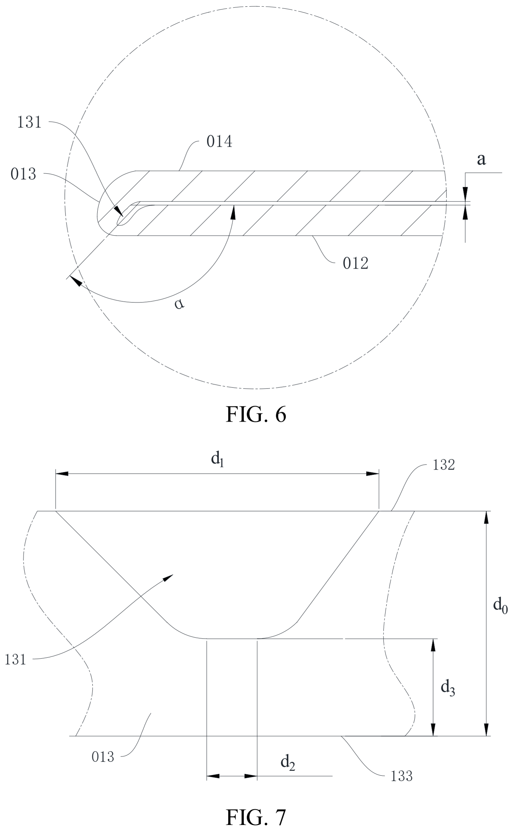

In some embodiments, when the number of the groove 131 is one, the groove 131 may be arranged close to the welding part 014, as shown in FIG. 5. FIG. 5 is a schematic block diagram of the groove 131 after the welding part 014 has been bent for the second time according to some embodiments of the present disclosure. Alternatively, the groove 131 may be arranged close to the vertical part 012, as shown in FIG. 6. FIG. 6 is a schematic block diagram of the groove 131 after the welding part 014 has been bent for the second time according to other some embodiments of the present disclosure. FIG. 5 and FIG. 6 show schematic cross-sectional views taking along a direction perpendicular to the extension direction of the groove 131 on the current collector 001 after the welding part 014 has been bent for the second time. In FIG. 5 and FIG. 6, the angle between a center line of the groove 131 between both groove walls of the groove 131 and a surface of the welding part 014 facing the vertical part 012 is α, and α satisfies: 90°<α < 180°. Based on the configuration of the groove 131, the gap size *α* between the welding part 014 and the vertical part 012 is less. For example, when the thickness d₀ of the current collector 001 is 2 mm, *a*≤3 mm. When the thickness d₀ of the current collector 001 is 0.5 mm, a surface of the welding part 014 and a surface of the vertical part 012 facing each other are in contact with each other, that is, *a*=0*.*

The parallelism (or parallelism tolerance) of the welding part 014 with respect to the vertical part 012 is *n,* satisfying: *n*≤1.

In addition, the current collector 001 has a conductive material, the conductive material may include, but is not limited to: a nickel sheet, a nickel-plated metal sheet, an aluminum sheet, or a copper sheet.

Exemplarily, the groove 131 may be, but is not limited to, a V-shaped groove, a rectangular groove, a semicircular groove, or a trapezoidal groove.

In some embodiments, by providing a groove 131 between the vertical part 012 and the welding part 014, the number of the material of the connection portion between the vertical part 012 and the welding part 014 may be reduced, thereby reducing the internal stress of the welding part 014 during the bending process toward the vertical part 012, and further reducing the obstruction of the connection portion to the welding part 014 approaching the vertical part 012, so that the gap between the welding part 014 and the vertical part 012 is reduced.

Therefore, on one hand, the space of the battery cell 002 occupied by the current collector 001 inside the battery cell 002 may be reduced. On the other hand, spacings between the two sides of the welding part 014 and the vertical part 012 may be substantially same as each other, so that the parallelism between the welding part 014 and the vertical part 012 may be improved, the ridge edge of the welding part 014 at a side of the welding part 014 away from the bent portion may be prevented from protruding toward the insulation member of the battery cell 002. Thus the reliability of the battery may be improved.

In addition, by providing the groove 131, bending of the welding part 014 may be guided by the groove 131, thereby ensuring that the welding part 014 may be bent with respect to the groove 131, and further improving the bending accuracy of the current collector 001 and the bending consistency of the current collector 001.

In some embodiments, the current collector 001 is a metal component and has elasticity. By providing the groove 131, a rebound amplitude of the welding part 014 after bending may be controlled and reduced, so that the bending accuracy of the welding part 014 may be improved, the positioning accuracy of the welding part 014 may be improved, and the welding between the tab and the welding part 014 and the insertion of the core pack 023 into a shell may be facilitated.

FIG. 7 is a schematic block diagram of a groove 131 according to some embodiments of the present disclosure. In an embodiment, a width of the groove opening of the groove 131 at the top of the groove 131 is d₁, and a width of the groove 131 at the bottom of the groove 131 is d₂. d₁ and d₂ satisfy: d₁>d₂.

It can be understood that when the width of the groove opening of the groove 131 at the top of the groove 131 is not greater than the width of the groove 131 at the bottom of the groove 131, during the bending process of the welding part 014 toward the vertical part 012, groove walls of the groove on the two sides of the groove 131 abut against each other and are squeezed by each other, so that the internal stress of the connection portion in the bending process is greater, thereby creating an obstruction for the welding part 014 approaching the vertical part 012, which is not conducive to reducing the gap between the welding part 014 and the vertical part 012.

Based on this, in the presented embodiments, since the width of the groove opening of the groove 131 at the top of the groove 131 is greater than the width of the groove 131 at the bottom of the groove 131, it is possible to avoid the groove walls of the groove on the two sides of the groove 131 from abutting against and squeezing each other during the bending process of the welding part 014, thereby reducing the internal stress of the connection portion during the bending process of the welding part 014 toward the vertical part 012, thereby reducing the obstruction of the connection portion between the welding part 014 and the vertical part 012 for the welding part 014 approaching the vertical part 012. In this way, the gap between the welding part 014 and the vertical part 012 may be reduced.

As shown in FIG. 7, in some embodiments, the width of the groove opening of the groove 131 at the top of the groove 131 is d₁, and the thickness of the first conductive part 013 is d₀. d₁ and d₀ satisfy: 0.3d₀≤d₁≤4.3d₀.

It can be understood that d₁ may be but is not limited to 0.3d₀, 0.9d₀, 1.3d₀, 1.5d₀, 2d₀, 2.3d₀, 0.3d₀, 0.3d₀, 0.3d₀, 0.3d₀, 0.3d₀, and/or 4.3d₀.

In some embodiments, by setting the width of the groove opening of the groove 131 at the top of the groove 131, it may avoid that the width of the groove opening of the groove 131 at the top of the groove 131 is too little to make eliminating of the internal stress in the bending process significant, and it may avoid that the width of the notch is too great, so as to reduce the strength of the current collector 001.

As shown in FIG. 7. In some embodiments, the width of the groove 131 at the bottom of the groove 131 is d₂, and d₂ satisfies: d₂>0.

Exemplarily, d₂≥0.2d₀. For example, when d₀ is 4 mm, d₂ ≥ 0.8 mm.

In some embodiments, the width of the groove 131 is provided so that the groove walls of the groove 131 at both sides of the groove 131 are spaced apart from each other at a greater spacing. Therefore, it is possible to avoid the groove walls of the groove on the two sides of the groove 131 from abutting against and squeezing each other during the bending process of the welding part 014, thereby reducing the internal stress of the connection portion during the bending process of the welding part 014 toward the vertical part 012, thereby reducing the obstruction of the connection portion between the welding part 014 and the vertical part 012 for the welding part 014 approaching the vertical part 012. In this way, the gap between the welding part 014 and the vertical part 012 may be reduced.

As shown in FIG. 7, in some embodiments, the first conductive part 013 has a second surface 133 opposite to the first surface 132. The thickness of the first conductive part 013 is d₀. The minimum distance between the second surface 133 and the bottom of the groove 131 is d₃. d₀ and d₃ satisfy: 0.3d₀ ≤ d₃ ≤ 0.97d₀.

It can be understood that d₃ may be but is not limited to 0.3d₀, 0.36d₀, 0.4d₀, 0.45d₀, 0.5d₀, 0.53d₀, 0.58d₀, 0.6d₀, 0.7d₀, 0.8d₀, 0.93d₀, and/or 0.97d₀.

In addition, the thickness d₀ of the first conductive part 013 refers to the distance between the first surface 132 and the second surface 133 when the first conductive part 013 is not provided with the groove 131.

In some embodiments, the minimum distance between the second surface 133 and the bottom of the groove is set. Therefore, the strength of the current collector 001 at the groove 131 may be ensured based on the set minimum value of the minimum distance, thereby avoiding cracks at the groove 131 in the current collector 001. In addition, the minimum depth of the groove 131 may be ensured based on the set maximum value of the minimum distance, thereby reducing the internal stress of the connection portion during the bending process of the welding part 014 toward the vertical part 012. As a result, the obstruction of the connection portion between the welding part 014 and the vertical part 012 for the welding part 014 approaching the vertical part 012 may be reduced, so that the gap between the welding part 014 and the vertical part 012 may be reduced, and it may also help to improve consistency of the bending of the welding part 014 along the length direction of the groove 131, thereby reducing the influence of inconsistent bending on the battery energy density.

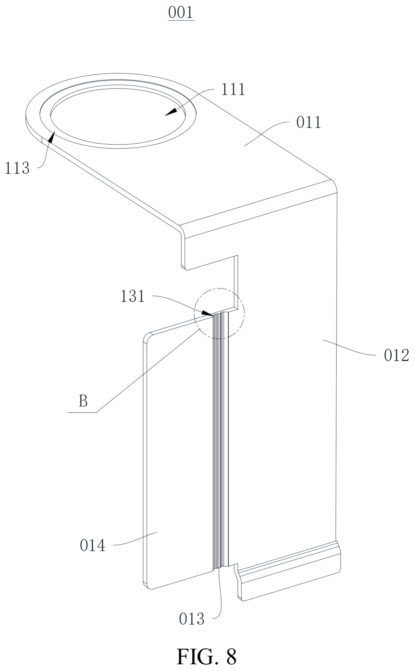

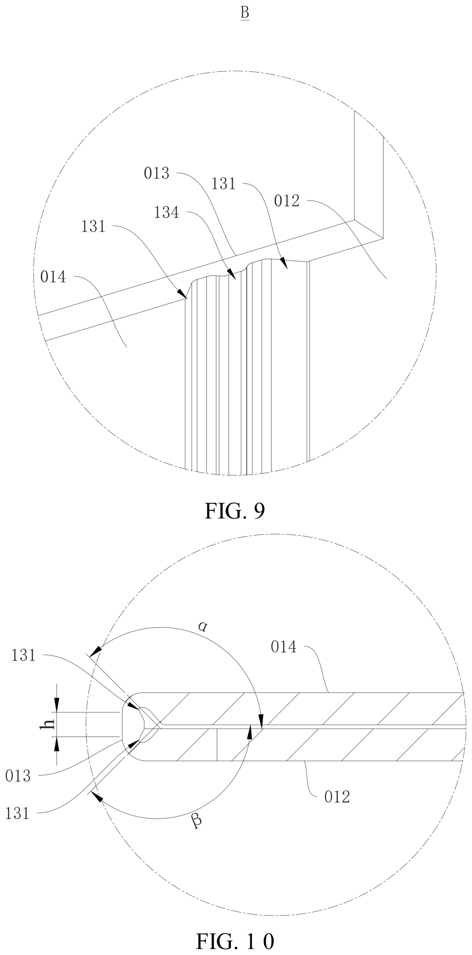

As shown in FIGs. 8 and 9, FIG. 8 is a schematic block diagram of a current collector 001 according to another some embodiments of the present disclosure, and FIG. 9 is an enlarged view of a portion B in FIG. 8. In some embodiments, there are two grooves 131. The two grooves 131 are arranged in parallel between the vertical part 012 and the welding part 014.

In some embodiments, when there are two grooves 131, after the welding part 014 has been bent twice, the structure of the groove 131 is shown in FIG. 10. FIG. 10 is a schematic block diagram of the groove 131 after the welding part 014 has been bent for the second time according to some embodiments of the present disclosure. In FIG. 10, one of the grooves 131 close to the welding part 014 is the first groove 131, the angle between the center line of the first groove between the groove walls at the sides of the first groove 131 and the surface of the welding part 014 facing the vertical part 012 is α, and α satisfies: 90°< α< 180°. one of the grooves 131 close to the vertical part 012 is the second groove 131, the angle between the center line of the second groove between the groove walls at the sides of the second groove 131 and the surface of the welding part 014 facing the vertical part 012 is β, β satisfies: 90°<β< 180°.

After the welding part 014 has been bent for the second time, the surface of the connection portion between the welding part 014 and the vertical part 012 away from the groove 131 may be formed by two arcuate segments, one of the two arcuate segments connects the surface of the vertical part 012 and the other of the two arcuate segments, and the other of the two arcuate segments connects the surface of the welding part 014 and one of the two arcuate segments. The surface of the connection portion away from the groove 131 may be formed by two arcuate segments and a flat segment located between the two arcuate segments, as shown in FIG. 10. In the thickness direction of the welding part 014, the width of the flat segment is h, and h satisfies: ⅓d₀<h<3d₀.

It can be understood that the two grooves 131 may be arranged at intervals. Alternatively, a side of one of the two grooves 131 and a side of the other of the two grooves 131 adjacent with each other may be connected to and communicated with each other, that is, the adjacent groove walls of the two grooves 131 are arranged to be overlapped with each other.

In addition, since the current collector 001 has a certain thickness, when the welding part 014 is bent to be close to the vertical part 012, two corners are formed between the vertical part 012 and the welding part 014. The stress at the corners is relatively greater, which greatly hinders the bending of the welding part 014.

During the bending process of the welding part 014, the welding part 014 is bent toward the vertical part 012 with the central symmetry line between the two grooves 131 as the axis, so that the welding part 014 approaches to the vertical part 012 and is parallel to the vertical part 012.

Based on this, in the present embodiment, by providing two grooves 131, the stress of the connection portion may be reduced by reducing the number of the material of the connection portion at the two corners, so as to reduce the obstruction of the connection portion between the welding part 014 and the vertical part 012 for the welding part 014 approaching the vertical part 012, thereby reducing the gap between the welding part 014 and the vertical part 012. In addition, based on the grooves 131 at the two corners, the bending may be concentrated in the two grooves 131, thereby providing a more accurate bending guide for the bending of the welding part 014, thereby improving the bending accuracy of the welding part 014.

Further, due to the above configuration, a rebound amplitude of the welding part 014 after bending may be controlled and reduced, so that the bending accuracy of the welding part 014 may be improved, the positioning accuracy of the welding part 014 may be improved, and the welding between the tab and the welding part 014 and the insertion of the core pack 023 into a shell may be facilitated.

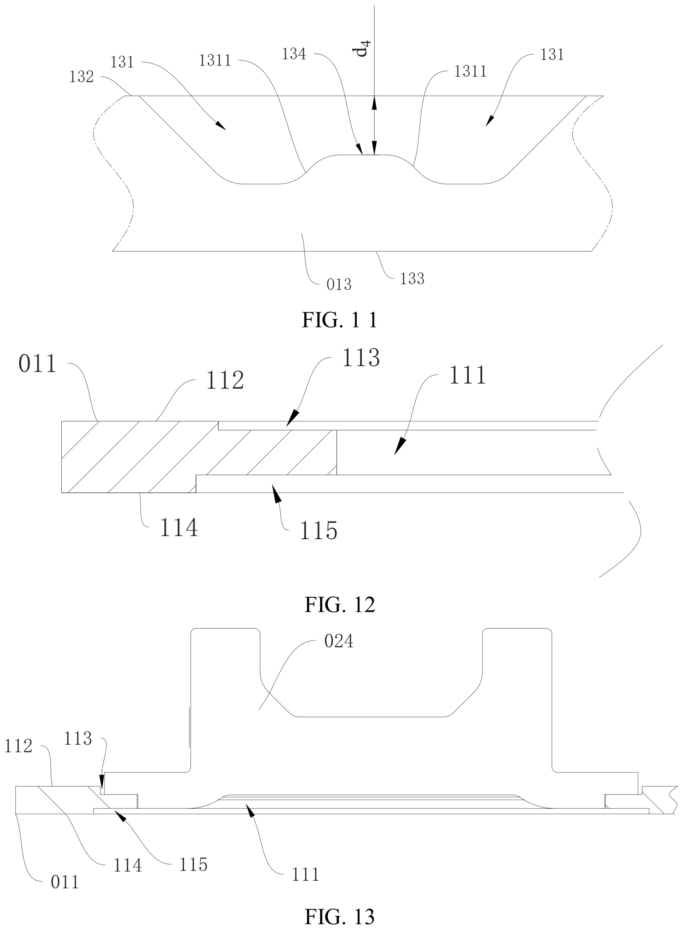

As shown in FIG. 11, FIG. 11 is a schematic block diagram of the groove 131 according to another some embodiments of the present disclosure. In some embodiments, a middle groove 134 is provided on the first surface 132. The middle groove 134 extends along the axis of the groove 131. The middle groove 134 is located between the two grooves 131. Both sides of the middle groove 134 in the width direction of the groove 131 are respectively connected with the two grooves 131, that is, the bottom of the middle groove 134 is connected with one of the groove walls of each of the two grooves 131 adjacent to the middle groove 134.

It can be understood that during the bending process of the welding part 014, the welding part 014 is bent toward the vertical part 012 with the middle groove 134 as the axis, so that the welding part 014 approaches to the vertical part 012 and is parallel to the vertical part 012.

In some embodiments, by providing the middle groove 134, the number of the material of the connection portion between the two grooves 131 may be reduced, thereby reducing the internal stress of the connection portion during the bending process of the welding part 014 toward the vertical part 012, and further reducing the obstruction of the connection portion between the welding part 014 and the vertical part 012 for the welding part 014 approaching the vertical part 012, so that the gap between the welding part 014 and the vertical part 012 is reduced.

As shown in FIG. 11. In some embodiments, the thickness of the first conductive part 013 is d₀, and the distance between the first surface 132 and the bottom of the middle groove 134 is d₄, d₀ and d₄ satisfy: 0<d₄≤ ²/₃ d₀.

It can be understood that d₄ may include but is not limited to 0.1d₀, 0.22d₀, 0.28d₀, 0.3d₀, 0.4d₀, 0.51d₀, 0. 6d₀, and/or ²/₃ d₀.

In some embodiments, due to the above-mentioned configuration, the middle groove 134 may be provided between the bottoms of the two grooves to reduce the number of the material of the connection portion between the two grooves 131, thereby reducing the internal stress of the connection portion during the bending process of the welding part 014 toward the vertical part 012, so as to improve the bending consistency of the welding part 014 on the groove 131. In addition, the maximum depth of the middle groove 134 is provided, so that the strength of the current collector 001 at the groove 131 is ensured, thereby avoiding the current collector 001 from cracking at the middle groove 134.

In some embodiments, each of the two grooves 131 has a first groove wall 1311 close to the middle groove 134. The first groove walls 1311 of the two grooves 131 are arranged to be connected with and overlap each other. The middle groove 134 is arranged at the connection between the first groove walls 1311. Alternatively, the two grooves 131 are spaced apart from each other with a certain spacing theretween, and the middle part of the middle groove 134 is arranged in the spacing between the two grooves 131 in the width direction of the middle groove 134, and the two sides of the middle groove 134 are respectively connected and communicated with the two grooves 131.

It is understood that the two grooves 131 may be arranged at intervals or partially connected. For example, when the thickness of the current collector 001 is relatively less, the two grooves 131 may be arranged to partially connected, and when the thickness of the current collector 001 is relatively greater, the two grooves 131 may be arranged at intervals.

As shown in FIG. 1, in some embodiments, the current collector 001 further includes a horizontal part 011. The horizontal part 011 is arranged to extend along the second direction. The second direction intersects the first direction. In some embodiments, the second direction is perpendicular to the first direction.

It can be understood that after the current collector 001 is formed by stamping of a plate, the horizontal part 011, the vertical part 012 and the welding part 014 are located in the same horizontal plane. In order to adapt to the connection between the pole and the tab, the horizontal part 011 is bent at the connection between the horizontal part 011 and the vertical part 012 so that the horizontal part 011 is perpendicular to the vertical part 012. When the current collector is applied to a battery cell, the horizontal part 011 is parallel to the top cover of the battery cell.

In some embodiments, a pole mating hole 111 is provided on the horizontal part 011.

It can be understood that the end of the pole close to the horizontal part 011 is inserted into the pole matching hole 111. After insertion, the pole and the horizontal part 011 are fixed by welding.

The fit gap between the pole and the pole matching hole 111 is *t, t* satisfies: 0.025mm≤t≤ 1mm. The fit gap t may be, but is not limited to, 0.025mm, 0.075mm, 0.128mm, 0.3mm, 0.6mm, 0.7mm, 0.85mm, 0.92mm, and/or 1mm.

In some embodiments, by providing the pole matching hole 111 on the horizontal part 011, the pole may be inserted into the horizontal part 011 based on the pole matching hole, thereby improving the positioning accuracy between the pole and the horizontal part 011.

As shown in FIG. 12, FIG. 12 is a partial block schematic diagram of a longitudinal section of the pole mating hole 111 according to some embodiments of the present disclosure. In some embodiments, along the axis of the groove 131, the horizontal part 011 has a third surface 112 away from the vertical part 012. The third surface 112 is provided with a first sink platform 113. The first sink platform 113 is provided along the circumference of the pole mating hole 111. The first sink platform 113 is connected to the pole mating hole 111.

It can be understood that a ring body is provided on the outer peripheral surface of the pole to match with the first sinking platform 113. The end of the pole close to the horizontal part 011 is inserted into the pole matching hole 111, and the ring body is located in the first sinking platform 113 and is blocked and matched with the first sinking platform 113, as shown in FIG. 13. FIG. 13 is a schematic diagram of the matching between the horizontal part 011 and the pole according to some embodiments of the present disclosure.

In some embodiments, due to the above arrangement, the matching surface between the horizontal part 011 and the pole may be increased, thereby improving the positioning accuracy between the horizontal part 011 and the pole.

As shown in FIG. 12. In some embodiments, along the axis of the groove 131, the horizontal part 011 has a fourth surface 114 away from the vertical part 012. The fourth surface 114 is provided with a second sink platform 115. The second sink platform 115 is provided along the circumference of the pole mating hole 111. The second sink platform 115 is connected to the pole mating hole 111.

It can be understood that the pole is welded to the horizontal part 011, for example, by laser welding.

Based on this, in some embodiments, by providing the second sinking platform 115, the operability of welding between the pole and the horizontal part 011 may be improved, thereby improving the welding quality between the pole and the horizontal part.

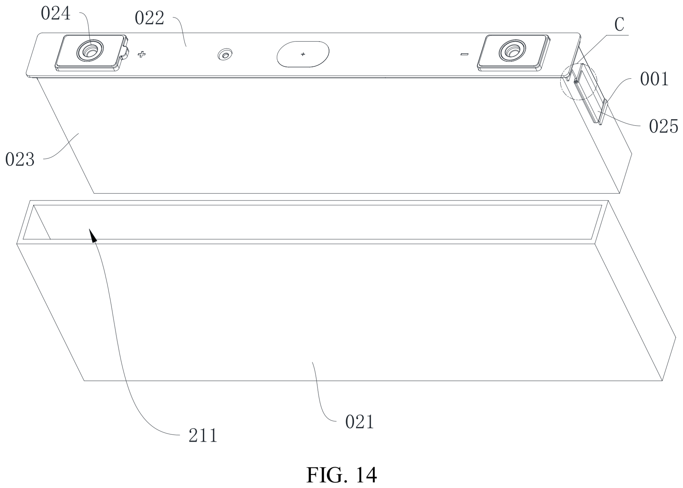

FIG. 14 is a schematic block diagram of the battery cell 002 according to some embodiments of the present disclosure. Accordingly, some embodiments of the present disclosure also provide a battery cell 002. The battery cell 002 includes a shell, a core package 023, a pole 024, and a current collector 001. The shell has a receiving cavity 211. The core package 023 is arranged in the receiving cavity 211. The pole 024 is inserted into an end of the shell. The current collector 001 connects the pole 024 with the tab 025 of the core package 023.

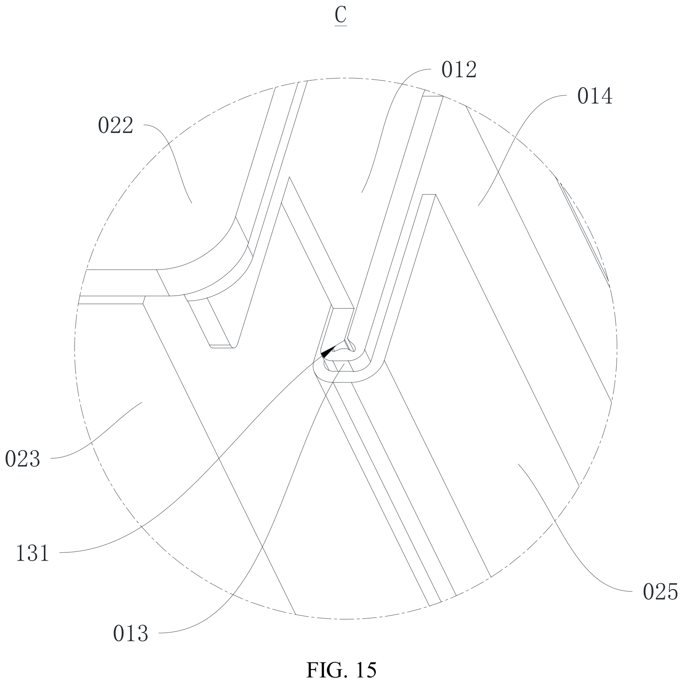

It can be understood that when the core package 023 is located in the accommodating cavity 211, a side of the core package is disposed opposite to the welding part 014, as shown in FIG. 15. FIG. 15 is an enlarged view of a portion C in FIG. 14.

The housing includes a cover 022 and a shell 021, and the cover 022 covers an end of the shell 021. The pole 024 is disposed on the cover 022.

In addition, the battery cell 002 may be applied to a battery. The battery includes a battery box and a battery cell 002. There are a plurality of battery cells 002. The plurality of battery cells 002 are arranged in the battery box. The plurality of battery cells 002 are connected in parallel or in series. The battery is applied to electrical equipment, for example, an electric vehicle.

In some embodiments, by using the current collector 001, the gap between the welding part 014 and the vertical part 012 may be reduced. Therefore, the space of the battery cell 002 occupied by the current collector 001 inside the battery cell 002 may be reduced, so that the energy density of the battery cell 002 is improved. In addition, the parallelism between the welding part 014 and the vertical part 012 may be improved to prevent the ridge edge of the welding part 014 at a side of the welding part 014 away from the connection portion from protruding toward the insulation member of the battery cell 002, thereby improving the reliability of the battery cell 002.

## Claims

1. A current collector (001), **characterized in that** the current collector (001) comprises a first conductive part (013), the first conductive part (013) extends along a first direction, the first conductive part (013) has a first surface (132) away from a core package (023) and is provided with a groove (131) at the first surface (132), and the groove (131) extends along the first direction; wherein the groove (131) divides the first conductive part (013) into a vertical part (012) and a welding part (014).

2. The current collector (001) according to claim 1, wherein a width of a groove opening of the groove (131) is d₁, and a width of the groove (131) at a bottom of the groove (131) is d₂, and wherein d₁>d₂.

3. The current collector (001) according to claim 1 or 2, wherein a width of a groove opening of the groove (131) is d₁, and a thickness of the first conductive part (013) is d₀, and wherein 0.3d₀≤d₁≤4.3d₀.

4. The current collector (001) according to any one of claims 1 to 3, wherein a width of the groove (131) at a bottom of the groove (131) is d₂, and wherein d₂>0.

5. The current collector (001) according to any one of claims 1 to 4, wherein the first conductive part (013) has a second surface (133) opposite to the first surface (132), a thickness of the first conductive part (013) is d₀, and a minimum distance between the second surface (133) and a bottom of the groove (131) is d₃, and wherein 0.3d₀≤d₃≤0.97d₀.

6. The current collector (001) according to any one of claims 1 to 5, wherein the groove (131) includes two grooves (131), and the two grooves (131) are arranged in parallel between the vertical part (012) and the welding part (014).

7. The current collector (001) according to claim 6, wherein a middle groove (134) is provided on the first surface (132), and the middle groove (134) extends along an axis of the groove (131), the middle groove (134) is located between the two grooves (131), and two sides of the middle groove (134) in the width direction of the grooves (131) are respectively connected with the two grooves (131).

8. The current collector (001) according to claim 7, wherein a thickness of the first conductive part (013) is d₀, and the distance between the first surface (132) and a bottom of the middle groove (134) is d₄, and wherein 0<d₄≤ ²/₃d₀.

9. The current collector (001) according to claim 7 or 8, wherein each of the two grooves (131) has a first groove wall (1311) close to the middle groove (134), the first groove wall (1311) of one of the two grooves (131) is arranged to be connected with the first groove wall (1311) of other one of the two grooves (131), and the middle groove (134) is arranged at a connection between the first groove wall (1311) of the one of the two grooves (131) and the first groove wall (1311) of the other one of the two grooves (131); or
the first groove wall (1311) of the one of the two grooves (131) and the first groove wall (1311) of the other one of the two grooves (131) are arranged at intervals, the middle groove (134) is arranged between the first groove wall (1311) of the one of the two grooves (131) and the first groove wall (1311) of the other one of the two grooves (131), and the two sides of the middle groove (134) are respectively connected to the first groove wall (1311) of the one of the two grooves (131) and the first groove wall (1311) of the other one of the two grooves (131).

10. A battery cell (002), **characterized in that** the battery cell (002) comprises:
a shell having a receiving cavity (211);
a core package (023) is arranged in the receiving cavity (211);
a pole (024) is inserted into an end of the shell; and
the current collector (001) according to any one of claims 1 to 9, wherein the current collector (001) connects a pole (024) to a tab (025) of the core package (023).
